# EUROPÄISCHE PATENTANMELDUNG

(11) **EP 2 090 167 A1**
(43) Veröffentlichungstag der Anmeldung: **19.08.2009**
(21) Anmeldenummer: 08151372.3
(22) Anmeldetag: 13.02.2008
(51) Int. Cl.: A01N 43/38, A01N 47/06, A01P 7/02, A01P 7/04

(54) **Verwendung von Tetramsäurederivaten zur Bekämpfung von tierischen Schädlingen nach Stamm-, Zweig-, Blütenstand- und Knospenbehandlungen**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung betrifft die Verwendung von Tetramsäurederivaten der Formeln (I) oder (II) 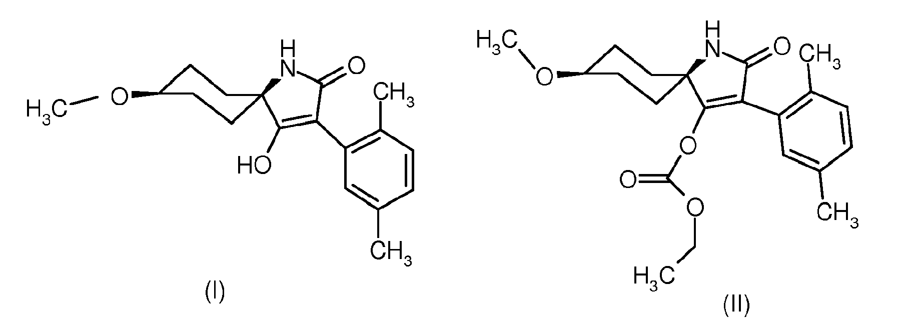 zur Bekämpfung von tierischen Schädlingen nach Stammbehandlungen (Anspritzen, Anstreichen, Injektion, Aufbringen), Behandlungen von Ästen, Stängel, Trieben und Zweigen (Anstreichen, Anspritzen, Aufbringen), Blütenstand- und Knospenbehandlungen durch Injektion.

## Beschreibung

Die vorliegende Erfindung betrifft die Verwendung von Tetramsäurederivaten zur Bekämpfung von tierischen Schädlingen nach Stammbehandlungen (Anspritzen, Anstreichen, Injektion, Aufbringen), Behandlungen von Ästen, Stängel, Trieben und Zweigen (Anstreichen, Anspritzen, Aufbringen), Blütenstand- und Knospenbehandlungen durch Injektion.

Bekannt mit insektizider und/oder akarizider Wirkung sind Tetramsäurederivate (WO 98/05638) sowie deren cis-Isomeren (WO 04/007448).

Weiterhin bekannt ist die Verwendung von Tetramsäurederivaten gegen Spinnmilben und Insekten nach Angiessen, Tröpfchenapplikation oder Bodeninjektion (WO 07/126691).

Überraschenderweise wurde nun gefunden, dass die Verbindungen der Formeln (I) oder (II) 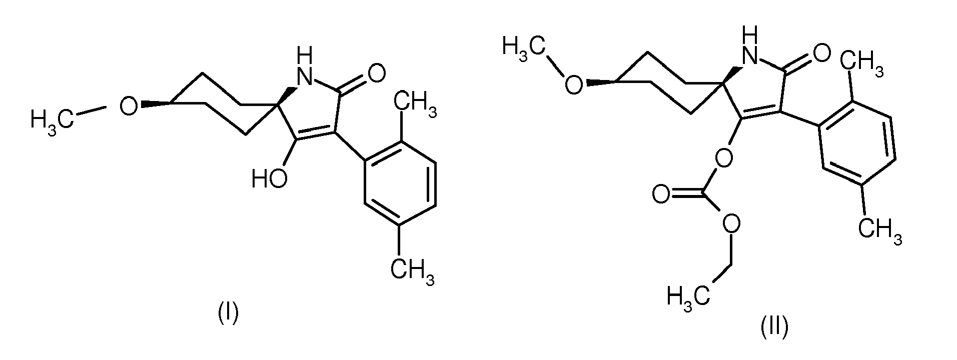 auch gut zur Bekämpfung von Insekten und Spinnmilben nach Stammbehandlung (z.B. durch Anstreichen, Aufspritzen, Aufbringen, Injizieren), nach Behandlung von Stängel, Ästen, Zweigen und Trieben (z.B. durch Anstreichen, Aufspritzen, Aufbringen) und nach Injektion in Blütenknospen und Blütenstände (in Fachkreisen als bud-injection bekannt) geeignet sind.

Die vorliegende Erfindung betrifft demnach die Verwendung von Tetramsäurederivaten zur Bekämpfung von Insekten und Spinnmilben nach Stammanwendungen, Ast-, Stengel-, Zweig- und Triebanwendungen sowie Blütenstand- und Blütenknospenbehandlungen im Freiland oder in geschlossenen Systemen (z.B. Gewächshäuser oder unter Folien-Abdeckung) in einjährigen Kulturen (z.B. Zierpflanzen) und mehrjährigen Kulturen (z.B. tropische Früchte, Zitrus, Koniferen, Kernobst, Steinobst, Hopfen).

Die nur allgemein beschriebenen zu schützenden Kulturen sind im Folgenden differenziert und näher spezifiziert.

So versteht man hinsichtlich der Anwendung unter mehrjährigen Kulturen Zitrus, wie beispielsweise Orangen, Grapefruits, Mandarinen, Zitronen, Limetten, Bitterorangen, Kumquats, Satsumas;
aber auch Kernobst, wie beispielsweise Äpfel, Birnen und Quitten und Steinobst, wie beispielsweise Pfirsische, Nektarinen, Kirschen, Pflaumen, Zwetschgen, Aprikosen;
weiterhin Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven, Ölpalmen;
außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse,
darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.
Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amyrillis, Dahlien, Azaleen, Malven,
aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien,
ferner z.B. Sträucher und Koniferen wie beispielsweise Ficus, Rhododendron, Fichten, Tannen, Kiefern, Eiben, Wacholder, Pinien, Oleander.

Bevorzugt sind aus der Familie der Thripse (Thripidae): Frankliniella spp., Thrips spp., Heliothrips spp., Hercinothrips spp., Caliothrips spp., Scirthothrips spp. in Kulturen wie z.B. Beerenfrüchte, Zierpflanzen, Kartoffeln, tropischen Kulturen, Wein, Nüsse, Zitrus, Tee.

Bevorzugt sind aus der Familie der Schmier- und Wollläuse (Pseudococcidae): Pericerga, Pseudococcus spp., Planococcus spp., Dysmicoccus spp., in Kulturen wie z.B. Zitrus, Stein- und Kernobst, Tee, Wein, Zierpflanzen und tropischen Kulturen.

Bevorzugt sind aus der Familie der Napfschildläuse (Coccidae): Ceroplastes spp., Drosicha spp. Pulvinaria spp., Protopulminaria spp., Saissetia spp., Coccus spp., in mehrjährigen Kulturen wie z.B. Zitrus, Kernobst, Steinobst, Oliven, Wein, Kaffee, Tee, tropischen Kulturen, Zierpflanzen.

Bevorzugt sind aus der Familie der Deckelschildläuse (Diaspididae): Quadraspidiotus spp., Aonidiella spp., Lepidosaphes spp., Aspidiotus spp., Parlatoria spp., Pseudaulacaspis spp., Unaspis spp., Pinnaspis spp., Selenaspidus spp., in Kulturen wie z.B. Zitrus, Kernobst, Steinobst, Mandeln, Nüssen, Oliven, Tee, Zierpflanzen, Wein, tropischen Kulturen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und
Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit dem Wirkstoff erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injezieren und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wird (Genetic Modified Organisms) und deren Teile behandelt. Der Begriff "Teile" bzw. "Teile von Pflanzen" oder "Pflanzenteile" wird oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CrylIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die Wirkstoffe der Formeln (I) und (II) können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

### Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 % und daneben bevorzugt Streckmittel und/oder oberflächenaktive Mittel.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

### Anwendungsbeispiele

### Thripse (Thripidae)

Ganz besonders bevorzugt ist die Bekämpfung folgender Arten aus der Familie der Thripse (Thripidae) in folgenden Kulturen nach Blütenstand- und Knospenbehandlung:

| | |
|---|---|
| Frankliniella occidentalis Frankliniella schultzei Frankliniella fusca | in Beerenfrüchten, in Zierpflanzen wie Rosen, Hibiskus, Chrysanthemen sowie in Kartoffeln und in tropischen Kulturen wie z.B. Papayas, Avocado, Coniferen |
| Thrips palmi Thrips tabaci Thrips hawaiiensis | in Beerenfrüchten, in Zierpflanzen wie z.B. Rosen, Hibiskus, in tropischen Kulturen wie z.B. Papayas, Ananas, Bananen, Wein, Nüsse |
| Heliothrips haemorrhoidalis | in Zierpflanzen wie z.B. Rosen, Hibiskus, Azaleen, tropische Kulturen wie Guaven, Zitrus wie z.B. Zitronen, Orangen, Wein, Nüsse wie z.B. Macademia-Nüsse |
| Hercinothrips femoralis Hercinothrips bicinctus Hercinothrips phaseoli | in tropischen Kulturen wie z.B. Bananen, Zierpflanzen |
| Caliothrips phaseoli | in tropischen Früchten wie z.B. Avocados |
| Scirthothrips aurantii Scirthothrips dorsalis Scirthothrips citri | in Zitrus wie z.B. Orangen, Zitronen, Grapefruits, Mandarinen, Zierpflanzen, Tee |

### Schmier- und Wollläuse (Pseudococcidae)

Ganz besonders bevorzugt ist die Bekämpfung folgender Arten aus der Familie der Schmier- und Wollläuse (Pseudococcidae) in folgenden Kulturen nach Stammapplikation:

| | |
|---|---|
| Pseudococcus citri Pseudococcus comstocki Pseudococcus maritimus | in Zitrus wie z.B. Orangen, Mandarinen, Grapefruits, Limetten, Zitronen, Satsumas, in Kernobst wie z.B. Äpfeln und Birnen, in Wein, in Zierpflanzen, in tropischen Kulturen wie z.B. Ananas, Bananen |
| Dysmicoccus boninsis Dysmicoccus cryptus | in Kernobst wie z.B. Äpfeln, Birnen, in Tee, in tropischen Kulturen wie z.B. Ananas, Guyabano, Bananen |
| Dysmicoccus brevipes | |
| Planococcus lilacinus Planococcus citri | in Zitrus wie z.B. Orangen, Mandarinen, Grapefruits, Limetten, Zitronen, Satsumas, in Wein, |
| Pericerga purchasi | in Zitrus wie z.B. Orangen, Mandarinen, Grapefruits, Limetten, Zitronen, Satsumas |

### Napfschildläuse (Coccidae)

Ganz besonders bevorzugt ist die Bekämpfung folgender Arten aus der Familie der Napfschildläuse (Coccidae) in folgenden Kulturen bevorzugt nach Stammapplikation:

| | |
|---|---|
| Ceroplastes ceriferus Ceroplastes floridensis Ceroplastes rubens Ceroplastes rusci | in Zitrus wie z.B. Orangen, Grapefruits, Mandarinen, Zitronen, Limetten, Satsumas |
| Drosicha mangiferae Drosicha stebbengii | in tropischen Kulturen, z.B. Mangos |
| Pulvinaria aurantii Pulvinaria aethiopicus Pulvinaria vitis | in Zitrus wie z.B. Orangen, Grapefruits, Mandarinen, Zitronen, Limetten, Satsumas, in Wein |
| Protopulminaria pyriformis | in Kern- und Steinobst, |
| Saissetia oleae Saissetia nigra | in Zitrus wie z.B. Orangen, Grapefruits, Mandarinen, Limetten, in Zitrus wie z.B. Zitronen, Satsumas, in Oliven, in tropischen Kulturen z.B. Bananen |
| Coccus viridis | in Zitrus wie z.B. Orangen, Mandarinen, Grapefruits, Limetten, Zitronen, Satsumas, in tropischen Kulturen, z.B. Ananas |
| Coccus hesperdium | in Kernobst wie z.B. Äpfeln, Birnen, in Steinobst wie z.B. Pfirsichen, Nektarinen, Pflaumen, Aprikosen, Kirschen, in Kaffee, in Oliven, in Tee, in Wein |

### Deckelschildläuse (Diaspididae)

Ganz besonders bevorzugt ist die Bekämpfung folgender Arten aus der Familie der Deckelschildläuse (Diaspididae) in folgenden Kulturen bevorzugt nach Stammapplikation:

| | |
|---|---|
| Quadraspidiotus perniciosus Quadraspidiotus juglansregiae | in Zitrus wie z.B. Orangen, Mandarinen, Limonen, Grapefruits, in Kernobst wie z.B. Äpfeln, Birnen, Quitten, in Steinobst wie z.B . Pfirsichen, Nektarinen, Aprikosen, Pflaumen, Kirschen, in Nüssen wie z.B. Mandeln, Pistazien, Wallnüsse, Haselnüsse, in Zierpflanzen wie z.B. Sträuchern, Koniferen, Topfpflanzen, in tropischen Kulturen, z.B. Litschies |
| Aonidiella aurantii Aonidiella citrina | in Zitrus wie z.B. Orangen, Mandarinen, Grapefruits, Limetten, Zitronen, Satsumas |
| Lepidosaphes ulmi Lepidosaphes beckii | in Zitrus wie z.B. Orangen, Mandarinen, Grapefruits, Limetten, Zitronen, Satsumas, in Kernobst wie z.B. Äpfeln und Birnen, in Steinobst wie z.B. Pfirsiche, Nektarinen, Pflaumen, Aprikosen, Kirschen |
| Aspidiotus destructor Aspidiotus hederae Aspidiotus nerii Aspidiotus ficus | in Zitrus wie z.B. Orangen, Mandarinen, Grapefruits, Limetten, Zitronen, Satsumas, in Zierpflanzen wie z.B. Sträuchern, Topfpflanzen in Oliven, in tropischen Kulturen, z.B. Mangos, Limonen, |
| Pseudaulacaspis pentagona | in Kernobst wie z.B. Äpfel, Birnen, in Steinobst wie z.B. Pfirsiche, Aprikosen, Nektarinen, Kirschen, Pflaumen, Zwetschgen, in Tee |
| Unaspis yanonensis Unaspis citri | in Zitrus wie z.B.Orangen, Mandarinen, Limetten, Grapefruits, Zitronen, Satsumas, in tropischen Kulturen, z.B. Ananas, Mangos |
| Pinnaspis aspidistrae Parlatoria ziziphus Parlatoria pergandei Parlatoria oleae | in Zitrus wie z.B. Orangen, Mandarinen, Limetten, Zitronen, Satsumas, Grapefruits, in Oliven |
| Selenaspidus articulatus | in Zitrus wie z.B. Orangen, Mandarinen, Limetten, Grapefruits, Zitronen, Satsumas |

### Beispiel 1

Bananenbäume der Sorte "Cavendish" werden in drei Replikationen gegen Bananenblütenthrips (Thrips hawaiiensis) behandelt. Dabei werden die Wirkstoffe Beispiel (II) (100 OD) gegen den kommerziellen Standard Imidacloprid (100 SL) in den angegebenen Aufwandmengen geprüft. Die Applikation erfolgt durch Injektion von je 80 ml Injektionslösung in die Blütenknospen. Es werden jeweils drei Blütenknospen behandelt. Die Auswertung erfolgt 3 und 91 Tage nach der Behandlung, indem man die Abtötung der Population an den Blüten- bzw. Fruchtständen bonitiert.

| Wirkstoff | Aufwandmenge (g) a.i./l | Wirkung % Abott | |
|---|---|---|---|
| | | 3d | 91d |
| Imidacloprid | 0.1 | 98.4 | 100 |
| Beispiel (II) | 0.3 | 66.7 | 100 |

### Beispiel 2

Bananenbäume (Wachstumstadium BBCH 1130) der Sorte "Cavendish" bestehend aus Mutterpflanze und Seitentrieb werden in drei Replikationen nach Blattbehandlung gegen Aspidiotus destructor und gegen die Ananasschmierlaus Dysmicoccus brevipes durch Pseudo-Stammapplikation behandelt. Dazu werden je 100 ml Spritzlösung appliziert, wobei jeweils 50 ml auf die Blätter und 50 ml auf den Stamm gespritzt wird. Vor der Stammapplikation wird zunächst die oberste Stammschicht abgeschält, welches allgemeine Praxis ist. Dabei wird der Wirkstoff (II) (SC 240) in einer Tankmischung mit 0.025 % Hoestick (XL 500) gegen die kommerziellen Standards Chlorpyrifos-methyl (500 EC) und Paraffinöl (Banole oil) (EC 600) geprüft.

Die Auswertung erfolgt 3, 7, 14 und 22 Tage nach der Behandlung, indem man die Abtötung der Ananasschmierlaus am Stamm bonitiert.

| Wirkstoff | Aufwandmenge g/l | Wirkung (%) Abott | | | |
|---|---|---|---|---|---|
| | | 3 d | 7 d | 14 d | 22 d |
| Banole oil | 30 | 87.9 | 91.7 | 89.0 | 96.5 |
| Chlorpyrifosmethyl | 0.8 | 98.9 | 99.3 | 100.0 | 100.0 |
| Beispiel (II) | 0.3 | 81.2 | 92.3 | 96.4 | 96.7 |

### Beispiel 3

Ca. 5 Jahre alte Orangenbäumchen der Sorte "Valencia" werden in drei Applikationen gegen die Rote Kalifornienschildlaus Aonidiella aurantii nach Stammapplikation durch Aufstreichen der Wirkstoffe behandelt. Dabei wird der Wirkstoff (II) (SC 240) gegen den kommerziellen Standard Imidacloprid in den angegebenen Aufwandmengen geprüft. Die Auswertung erfolgt 205 Tage nach der Behandlung in dem man den Befall auf den Früchten bonitiert.

| Wirkstoff | Aufwandmenge g a.i./Baum | Wirkung (% Abbott) |
|---|---|---|
| Imidacloprid | 2 | 100 |
| Beispiel (II) | 4 | 100 |

## Patentansprüche

1. Verwendung von Verbindungen der Formeln (I) oder (II) 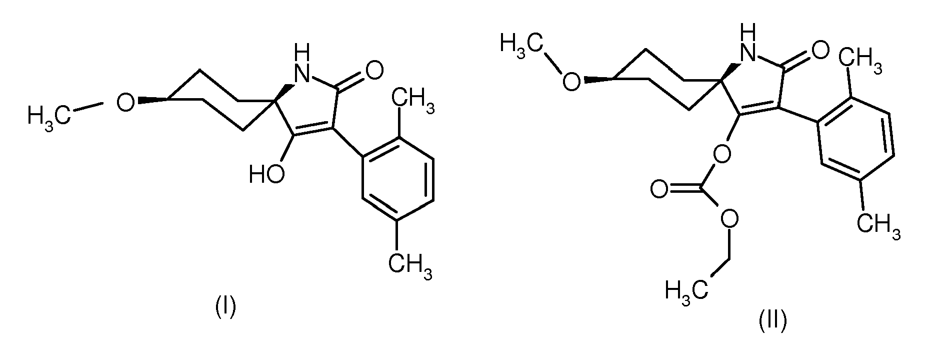 zur Bekämpfung von Insekten und Spinnmilben nach Stammbehandlung, nach Behandlung von Stängel, Ästen, Zweigen und Trieben und nach Injektion in Blütenknospen und Blütenstände.
